# EUROPÄISCHE PATENTSCHRIFT

(11) **EP 1 118 877 B1**
(45) Veröffentlichungstag und Bekanntmachung des Hinweises auf die Patenterteilung: **30.05.2007**
(21) Anmeldenummer: 01100937.0
(22) Anmeldetag: 17.01.2001
(51) Int. Cl.: G01S 17/89, G01S 7/497, G01S 7/484

(54) **Anordnung zur Verbesserung der Sicht in Fahrzeugen**
Device for improving visibility in vehicles
Dispositif d'amélioration de la visibilité dans des véhicules

(30) Priorität: 18.01.2000 DE 10002069
(43) Veröffentlichungstag der Anmeldung: 25.07.2001
(73) Patentinhaber: DaimlerChrysler AG, 70327 Stuttgart (DE)
(72) Erfinder: Holz, Michael, 89250 Senden (DE); Weidel, Edgar, 89250 Senden (DE)
(74) Vertreter: Straub, Bernd

(56) Entgegenhaltungen:
- DE-A- 4 007 646
- DE-C- 483 263
- DE-C- 918 187

## Beschreibung

Die vorliegende Erfindung betrifft allgemein eine Anordnung zur Verbesserung der Sicht in Fahrzeugen.

Schlechte Sicht bei Nacht ist eine anstrengende und gefährliche Situation, die von vielen Fahrern gefürchtet wird. Als Folge der schlechten Sicht ist die Unfallhäufigkeit in der Nacht deutlich höher, verglichen mit Fahrten bei Tag und guter Sicht. Dabei können die nachts auftretenden Schwierigkeiten wie folgt eingeteilt werden:
Die Sichtweite mit Abblendlicht bei Gegenverkehr ist gering und wird von vielen Fahrern falsch eingeschätzt. Das führt zu einem späten Erkennen von unbeleuchteten Hindernissen, Fußgängern, Radfahrern ohne Licht und von Tieren und damit zu Unfällen.

Durch die Scheinwerfer entgegenkommender Fahrzeuge und deren Reflexe, vor allem bei nasser Fahrbahn wird der Fahrer geblendet, der Fahrer fährt kurzzeitig in ein schwarzes Loch. Besonders gefährdet sind nachtblinde und ältere Fahrer wegen ihrer geringeren Sehleistung.

Bei Regen, Nebel und Schneetreiben können die Sichtverhältnisse nochmals deutlich schlechter sein.

Eine Verbesserung der Sicht bei Nacht wird durch ein optoelektronisches System erreicht, das in der DE-A-40 07 646 dargelegt ist. Das System nimmt ein Videobild einer Szene auf und stellt es dem Fahrer geeignet dar. Das dargestellte Bild zeigt wesentlich mehr als der Fahrer mit seinen Augen durch die Scheibe direkt sehen kann.

Das aus der DE-A-40 07 646 bekannte System enthält zusätzlich zu den herkömmlichen Scheinwerfern zwei "Laserscheinwerfer", die im nahen Infrarot emittierende Laserdioden als Lichtquelle nutzen. Die Laserdioden werden gepulst betrieben mit einer Pulslänge von beispielsweise 50-100 µs und einem Pulsabstand von 100-1000 µs. Damit kann eine Beleuchtung der Szene mit einem streifen- oder punktförmigen Muster erreicht werden, wodurch eine plastische Hervorhebung der beleuchteten Gegenstände wie z.B. Autos vom Straßenverlauf erzielt werden kann. Eine CCD-Kamera zur Aufnahme des Videobildes ist im Dachbereich des Fahrzeugs untergebracht. Die CCD-Kamera besitzt einen elektronischen Verschluß, der mit den Laserdioden zur Vermeidung von Störungen synchronisiert ist. Durch die Synchronisierung der CCD-Kamera mit den emittierenden Laserdioden kann sichergestellt werden, daß nur Licht aus dem von der Laserdiode beleuchteten Streifen bzw. Flächen zum Bildaufbau beiträgt und durch Mehrfachstreuung aus anderen Winkelbereichen einfallendes Licht nicht stört. Die Einzelheiten der Synchronisierung sind in der DE-A-40 07 646 beschrieben und werden zur Vermeidung von Wiederholungen weiterhin nicht ausgeführt.

Gemäß DE-A-40 07 646 wird vor dem Kameraobjektiv ein optisches Bandpaßfilter angebracht. Das Videobild wird dem Fahrer auf einem LCD-Bildschirm gezeigt. Das Verwenden von Laserlicht aus DE-A-40 07 646 hat eine Reihe von Vorteilen. Die Laser emittieren bei einer Wellenlänge von 800 bis 2000 nm, vorzugsweise 810 nm, im nahen Infrarot. Da das infrarote Licht für das menschliche Auge nahezu nicht sichtbar ist, kann permanent aufgeblendet beleuchtet werden.

Durch Verwenden von Laserlicht kann die Blendung der Kamera durch die sichtbaren Scheinwerfer entgegenkommender Fahrzeuge erheblich reduziert werden. Zum einen weist das Laserlicht nur eine spektrale Breite von wenigen nm auf, während sichtbare Lichtquellen wie Halogenlampen mehrere hundert nm breit sind. Bringt man ein optisches Bandpaßfilter mit einer schmalen Durchlaßbreite vor das Kameraobjektiv, so wird nahezu das gesamte Laserlicht ausgestrahlt, während das Licht entgegenkommender Fahrzeuge um einen Faktor 50 bis 100 geschwächt wird. Zum anderen folgen Laserdioden dem Treiberstrom unmittelbar, und sie können daher auf eine einfache Art und Weise schnell gepulst werden. Verwendet man eine Videokamera mit einem schnellen elektronischen Verschluß, der mit den Lasern synchronisiert ist, so kann das Licht entgegenkommender Fahrzeuge weiter reduziert werden.

Ein Problem ergibt sich jedoch, wenn sich zwei derartige Nachtsichtsysteme mit permanent aufgeblendeten Laserscheinwerfern begegnen. In der DE 4007646 A 1 wurde dieses Problem dadurch gelöst, daß die Laserscheinwerfer aller Fahrzeuge mit der gleichen Polarisation, beispielsweise vertikaler Polarisation emittieren und vor dem Kameraobjektiv ein dazu senkrecht stehender Analysator oder Polarisator vorhanden ist.

Nachteilig bei der Verwendung von Polarisatoren und Analysatoren ist jedoch die Schwächung des von den Objekten reflektierten depolarisierten Lichts durch den Analysator, die meist den Faktor 2 bis 4 ausmacht.

Eine Vorrichtung zur blendungsfreien Führung von Fahrzeugen im Verkehr ist aus DE 2001086 C3 bekannt. Dabei wird im Sichtbereich des Fahrzeuglenkers ein Schirm mit veränderlicher Lichtdurchlässigkeit angeordnet und die Scheinwerfer sind mit Blitzlichtquellen ausgerüstet. Die Lichtdurchlässigkeit des Schirms wird durch eine Steuereinrichtung mit einer vorgegebenen Pulsfrequenz elektrisch gesteuert und zwischen nahezu vollständiger und stark reduzierter Lichtdurchlässigkeit verändert.

Aus der Schrift DE 3836095 A1 ist eine Vorrichtung zur blendungsfreien Führung von Fahrzeugen im Verkehr bekannt, bei welcher ebenfalls im Sichtbereich des Fahrzeuglenkers einen Schirm angeordnet ist, mit einer Lichtdurchlässigkeit, die durch eine Steuereinrichtung mit einer vorgegebenen Pulsfrequenz steuerbar ist. Diese Vorrichtung enthält auch Scheinwerfer zur permanenten Abstrahlung von gepulstem Infrarotlicht. Die Steuereinrichtung ist mit einem fotoelektrischen Empfänger verbunden, der so angeordnet ist, dass er von einem entgegenkommenden Fahrzeug ausgesandtes Licht als Fremdlicht auf nimmt und bei Auftreten von gepulstem Fremdlicht den Schirm und Scheinwerfer synchron und im Gegentakt zum gepulsten Fremdlicht steuert, derart, dass jeweils bei hoher Lichtemission des Fremdlichts die Lichtdurchlässigkeit des Schirms und die Lichtabgabe der Scheinwerfer reduziert werden.

Aus der deutschen Patentschrift DE 918 187 ist eine Blendschutzvorrichtung für Fahrzeuge bekannt, die einer Blendung des Fahrers bei einer Begegnung mit einem anderen Fahrzeug im Dunkeln entgegenwirkt bzw. eine solche verhindert. Hierzu wird ein Schirm vor den Augen des Fahrzeugführers im Bereich der Windschutzscheibe angeordnet, der intermittierend das einfallende Licht, insbesondere der Scheinwerfer des entgegenkommenden Fahrzeugs durchlässt bzw. dieses blockiert. Das intermittierende Durchlassen oder Sperren des sichtbaren Lichtes wird so mit den Scheinwerfern der entgegenkommenden Fahrzeug so zeitlich abgestimmt, dass zum Zeitpunkt des Aussendens von sichtbarem Licht durch die Scheinwerfer der entgegenkommenden Fahrzeuge der Blendschutz vor den Augen des Fahrzeugführers kein sichtbares Licht durchlässt, wogegen zum Zeitpunkt des Nichtaussendens von sichtbarem Licht durch die Scheinwerfer der entgegenkommenden Fahrzeuge der Blendschutz vor den Augen des Fahrzeugführers geöffnet und damit durchlässig für sichtbares Licht ist. Damit kann verhindert werden, dass der Fahrzeugführer in die Scheinwerfer der entgegenkommenden Fahrzeuge blickt und durch deren ausgesandtes sichtbares Licht geblendet werden kann. Die zeitliche Koordinierung der intermittierenden Scheinwerfer und der intermittierenden Blickfeldabschirmung der Blendschutzvorrichtung erfolgt dabei abhängig von der aktuellen Fahrtrichtung, die mit Hilfe eines Kompasses bestimmt wird und abhängig von einem über Funk zugeführten gepulsten Steuersignal.

Eine entsprechende Vorrichtung zur Blendverhinderung eines Fahrzeugführers ist aus der deutschen Patentschrift Nr. 483 263 bekannt, wobei hier abhängig von der Fahrtrichtung, die durch einen Kompass detektiert wird, eine Filteranordnung aus Rot- und Grün-Filtern in das Sichtfeld des Fahrzeugführers alternierend eingeschwenkt wird. Eine entsprechende Filteranordnung ist vor den Scheinwerfern potenziell blendender Fahrzeuge vorgesehen. Durch die Verwendung der Grün-Filter kann rotes, ausgesendetes sichtbares Licht der Scheinwerfer ausgefiltert werden und dadurch ein Blenden durch die Scheinwerfer mit sichtbarem rotem Licht der entgegenkommenden Fahrzeuge verhindert werden.

Daher ist es eine Aufgabe der vorliegenden Erfindung, eine Anordnung zur Verbesserung der Sicht in Fahrzeugen zur Verfügung zu stellen, die das im emittierte Licht von entgegenkommenden Fahrzeugen mit permanent aufgeblendeten Laserscheinwerfern ohne Verluste zu unterdrücken vermag.

Diese und weitere, der nachstehenden Beschreibung und Zeichnungen zu entnehmenden Aufgaben, werden durch eine Anordnung gemäß den anliegenden Ansprüchen gelöst.

Weitere Merkmale und Vorteile sind deutlicher der folgenden Beschreibung der bevorzugten Ausführungsbeispiele der Erfindung, unter Hinweis auf die beiliegenden Figuren zu entnehmen, wobei
Fig. 1 eine schematische Ansicht des Gesamtaufbaus der erfindungsgemäßen Anordnung zur Verbesserung der Sicht in einem Fahrzeug ist, das exemplarisch als Omnibus dargestellt wird;
Fig. 2 eine zeitbezogene Darstellung der Intensitäten einer gepulsten Laserlichtquelle und der Synchronisierung der CCD-Kamera mit den emittierenden Laserdioden der Laserlichtquelle ist;
Fig. 3 die Übertragungscharakteristik eines in der erfindungsgemäßen Anordnung eingesetzten Bandpaßfilters sowie die Lichtintensitätsverteilung einer herkömmlichen Halogenlampe zeigt;
Fig. 4 eine erste Ausführungsform der Erfindung darstellt, in der die Erfassung, ob eine Blendung durch einen Laserscheinwerfer eines entgegenkommenden Fahrzeugs vorliegt, anhand der Daten des Videobildes vorgenommen wird;
Fig. 5 eine zweite Ausführungsform der Erfindung darstellt, in der die Erfassung, ob eine Blendung durch einen Laserscheinwerfer eines entgegenkommenden Fahrzeugs vorliegt, anhand eines separaten Detektors vorgenommen wird; und
Fig. 6 eine dritte Ausführungsform der Erfindung darstellt, in der die Erfassung, ob eine Blendung durch einen Laserscheinwerfer eines entgegenkommenden Fahrzeugs vorliegt, anhand eines festen Zeittakts erfolgt.

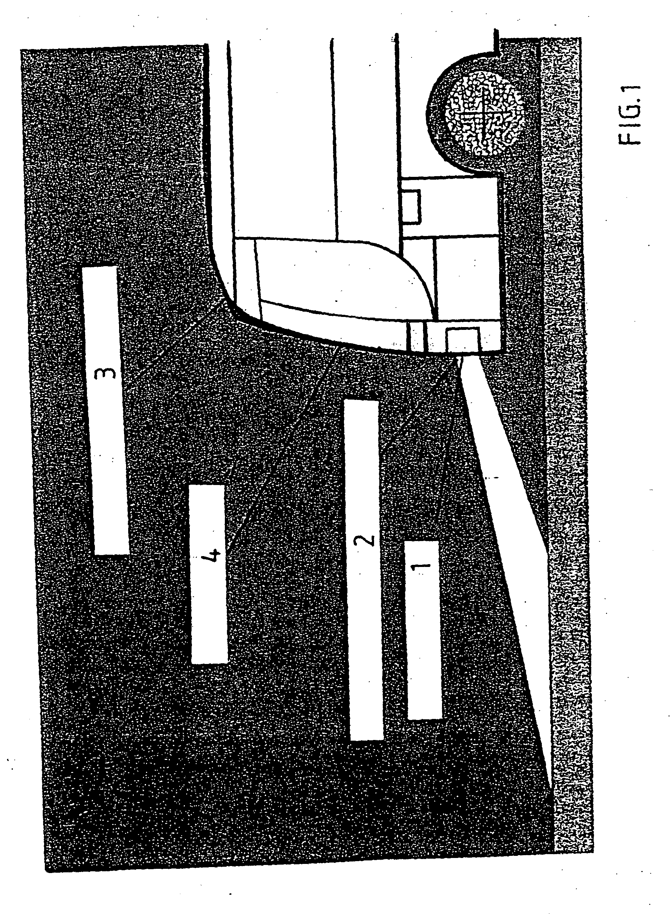

Unter der Bezugnahme auf die Fig. 1 wird ein Omnibus dargestellt, der mit im sichtbaren Bereich ausstrahlenden Scheinwerfern 1 und entsprechenden über den Scheinwerfern 1 angeordneten Laserscheinwerfern 2 ausgestattet ist. Die Anzahl der Laserscheinwerfer 2 kann abhängig von den Erfordernissen variabel sein, obwohl in der vorliegend beschriebenen bevorzugten Ausführung zwei derartige Laserscheinwerfer vorgesehen sind, die vorzugsweise jeweils in einem Blinkergehäuse hinter den Blinkern angebracht sind. Die Laserscheinwerfer emittieren permanent und gepulst im Infrarot- bzw. Nahinfrarotbereich, wobei bevorzugt Wellenlängen von 800 bis 2000 nm eingesetzt werden.

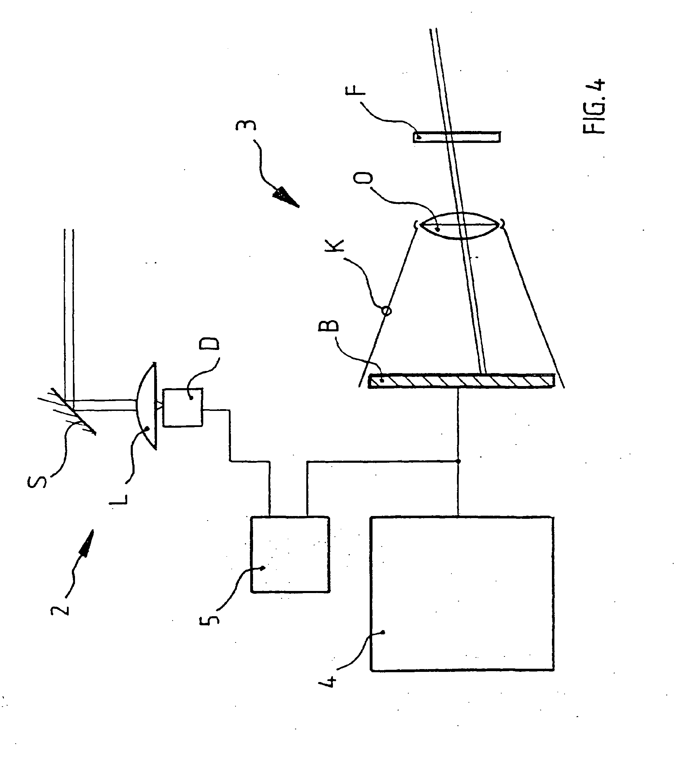

Die erfindungsgemäße Anordnung umfaßt weiterhin eine CCD-Kamera 3, die in der in Fig. 1 gezeigten Ausführung im Dachbereich des Omnibusses angebracht ist. Der Aufbau der CCD-Kamera wird in der Fig. 4 ausführlicher erläutert.

Die Anzeige der erfaßten Szene erfolgt auf einem an der Armatur des Omnibusses angebrachten Bildschirm 4, der vorteilhaft mit einem ausreichenden Abstand zum Fahrer angeordnet ist, um eine Anpassung des Auges an den Bildschirm zu vermeiden, sobald der Fahrer seinen Blick von der Szene zum Bildschirm schwenkt. Ein Abstand von zirka zwei Metern wurde in der vorliegenden Ausführung für ausreichend befunden.

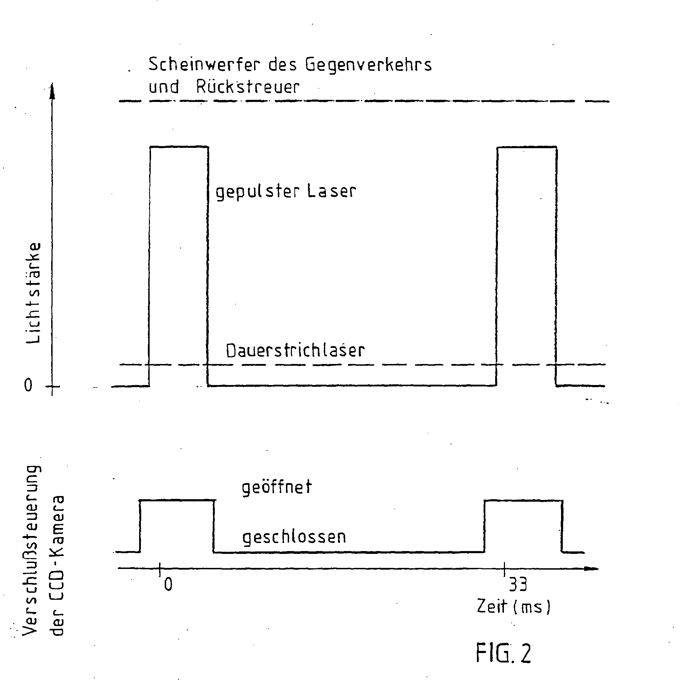

In Übereinstimmung mit der vorliegenden Erfindung wird eine gepulste Laserlichtquelle als Laserscheinwerfer 2 eingesetzt, um die Verwendung unterschiedlicher Zeitschlitze zu ermöglichen, damit eine Blendung durch entgegenkommende Laserscheinwerfer vermieden wird. Das Tastverhältnis - Laser an zu Laser aus - kann zwischen 1:3 und 1:100 variiert werden, wobei in Fig. 2 ein Tastverhältnis von 1:100 abgebildet ist. Bevorzugt werden Laserdioden mit einer Sendeleistung von 4 Watt bei einer Wellenlänge von etwa 800 nm als Laserlichtquelle eingesetzt. Dieser Wellenlängenbereich ist für das menschliche Auge nicht wahrnehmbar, und daher ist eine permanente Beleuchtung möglich.

Bekanntlich verfügen Laserdioden über eine schnelle Antwort auf einen Treiberstrom und können daher leicht in einem gepulsten Modus betrieben werden. Durch den gepulsten Betrieb wird, wie in Fig. 2 gezeigt, eine relativ hohe Leistung in den Zeitschlitzen erzielt, die sodann durch die in der Fig. 2 unten dargestellte Synchronisierung der Verschlußzeit der CCD-Kamera erfaßt werden kann. Der gepulste Betrieb und die Verwendung der Zeitschlitze in der erfindungsgemäßen Anordnung verringert weiterhin das von den Scheinwerfern des Gegenverkehrs und Reflexionen verursachte Störlicht, das ansonsten zur Blendung der CCD-Kamera führen könnte.

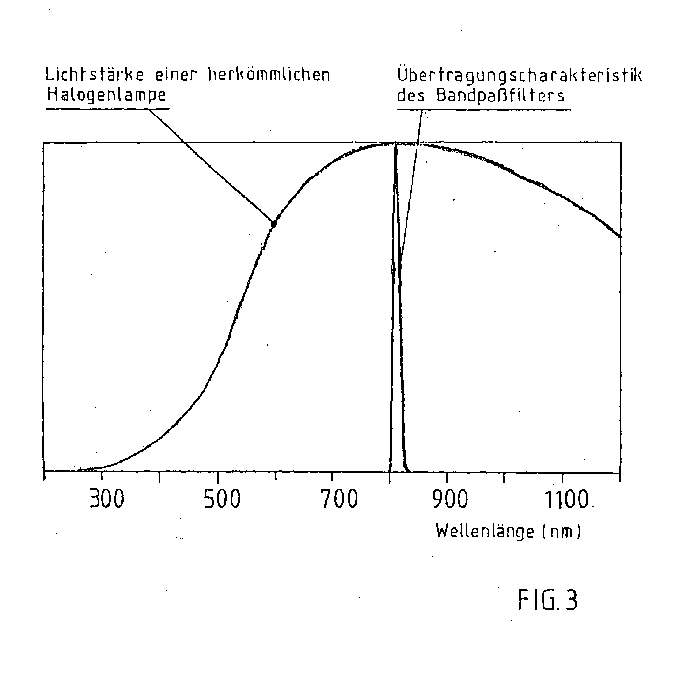

Die Blendung der CCD-Kamera wird ferner durch den Einsatz eines spektralen Bandpaßfilters F verringert, das eine in der Fig. 3 abgebildete Übertragungscharakteristik aufweist. Ein derartiges Bandpaßfilter ist aus der DE-A-40 07 646 bekannt und wird hierin nicht weiter beschrieben.

Unter Bezugnahme auf die Fig. 4 wird eine erste Ausführungsform der Erfindung darstellt, in der die Erfassung einer möglichen Blendung durch einen Laserscheinwerfer eines entgegenkommenden Fahrzeugs anhand der Daten des Videobildes vorgenommen wird. Der an und für sich aus der DE-A-40 07 646 bekannte Laserscheinwerfer 2 umfaßt eine emittierende Laserdiode D, deren Laserstrahl über eine entsprechende Linse L und einen Spiegel S ausgestrahlt wird. Der Laserscheinwerfer 2 arbeitet, wie in DE-A-40 07 646 beschrieben, durch die Aufweitung des Laserstrahls in nur einer Richtung bei gleichzeitiger enger Bündelung in der orthogonalen zweiten Richtung und durch Schwenken des ausgeleuchteten flachen Raumwinkelabschnitts in der zweiten Richtung. Es ist jedoch denkbar, die anderen in der DE-A-40 07 646 beschriebenen zwei Vorgehensweisen zur Ausleuchtung des Raumwinkelbereichs durch gleichzeitige Ausleuchtung des gesamten Bereichs durch zweidimensionale Strahlaufweitung oder durch Schwenken eines gebündelten Laserstrahls in zwei Dimensionen zur abtastenden Ausleuchtung des gesamten Raumwinkelbereichs einzusetzen.

Die mit 3 bezeichnete CCD-Kamera umfaßt das spektrale Bandpaßfilter F, eine vorgeschaltete Optik O sowie eine lichtempfindliche Bildfläche B, deren Signal dem Bildschirm 4 zugeführt wird.

In der ersten Ausführungsform prüft das System, ob eine Blendung durch einen Laserscheinwerfer vorliegt, indem die Daten des Videobildes selbst durch eine Auswertevorrichtung 5 ausgewertet werden. Im Falle einer Blendung wird ein Zeittakt der Laserdiode D durch eine zusätzliche Verzögerung geändert. Diese Änderung kann zufallsgeneriert sein. Sollte die Blendung andauern, wird die Prozedur wiederholt, bis keine Blendung mehr vorhanden ist. Die Änderung wird der Laserdiode D bzw. ihrer nicht näher beschriebenen Steuerelektronik zugeführt.

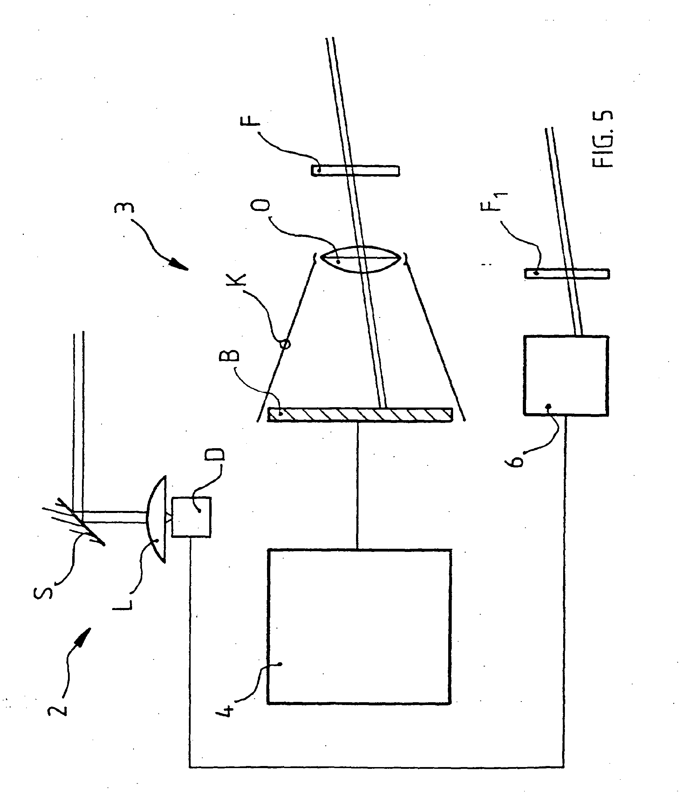

In der zweiten erfindungsgemäßen Ausführungsform der Fig. 5 wird, anstatt der im Zusammenhang mit der ersten Ausführungsform beschriebenen Auswertevorrichtung 5, ein zusätzlicher Detektor 6 mit einem schmalbandigen Interferenzfilter F1 verwendet, der dann zeitaufgelöst die Laserpulse und damit bereits die Zeittakte entgegenkommender Laserscheinwerfer bestimmt. Im Falle einer Blendung wird, wie vorstehend beschrieben, ein Zeittakt durch eine zusätzliche Verzögerung geändert. Diese Änderung kann ebenfalls zufallsgeneriert sein. Beim zusätzlichen Detektor kann auch ein freier Zeitschlitz direkt angesteuert werden. Sollte die Blendung andauern, wird die Prozedur auch in der zweiten Ausführungsform wiederholt, bis keine Blendung mehr vorhanden ist.

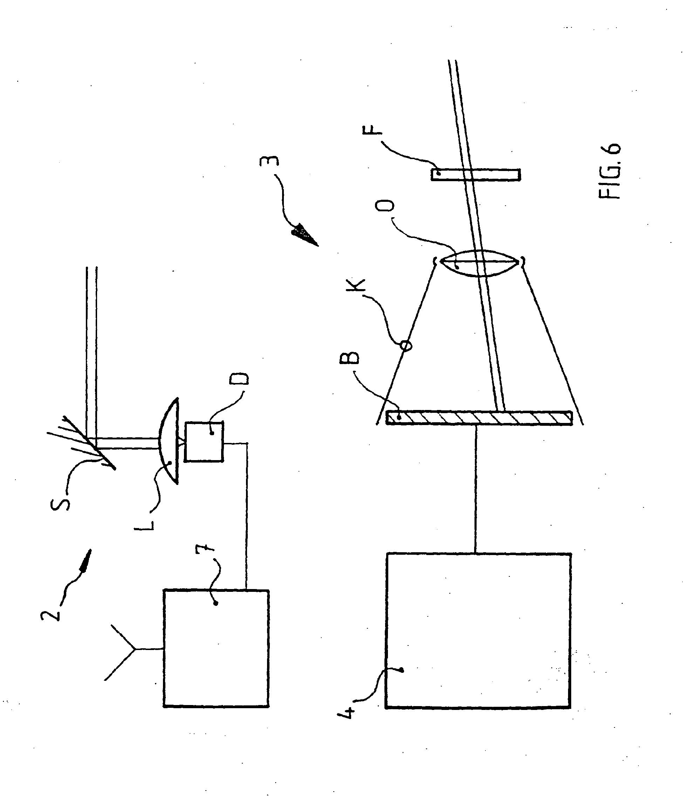

In einer dritten Ausführungsform, die in Fig. 6 gezeigt ist, wird ein fester Zeittakt für alle Fahrzeuge eingeführt. Die präzise Synchronisation aller Fahrzeuge kann durch Eichungen entweder über eine Funkuhr, Funktelefon oder GPS (Global Positioning System) in einer mit 7 bezeichneten Funkvorrichtung erhalten werden. Eine Präzision von 1 ms bis 5 ms ist dabei ausreichend. Durch eine interne Quarzuhr wird der präzise Zeittakt zwischen den Eichungen beibehalten. Ein elektronischer Kompaß bestimmt die Fahrtrichtung. Für einen fest vorgegebenen Richtungsbereich - z.B. zwischen Norden und Osten, Osten und Süden, Süden und Westen, Westen und Norden - wird ein anderer Zeitschlitz benutzt. Auf diese Weise ist eine Blendung ausgeschlossen.

In einer vierten Ausführungsform werden mehrere, beispielsweise drei, Laserscheinwerfer mit unterschiedlichen Wellenlängen - 800 nm, 820 nm, 840 nm - und unterschiedliche Bandpaßfilter F für diese Wellenlängen in einem Filterrad vor der Kamera verwendet. Ferner wird ein elektronischer Kompaß zur Bestimmung der Fahrtrichtung eingesetzt. Je nach Fahrtrichtung wird ein Laser mit einer vorgegebenen Wellenlänge und das zugehörige Bandpaßfilter des Filterrads benutzt.

Unter einem elektronischen Kompaß im Sinne dieser Anmeldung ist auch ein Mittel zu verstehen, welches aus einem Verfolgen (Tracking) von Positionsinformation (beispielsweise GPS-Information) Richtungsinformation, vergleichbar zu der von einem Kompaß gewinnbaren Richtungsinformation, ermittelt. Vor allem beim der Verwendung von schwenkbaren Beleuchtungsoptiken (2) kann es sinnvoll sein, ein Mittel vorzusehen, welches einen eventuellen Offset zwischen der Fahrtrichtung bzw. der Ausrichtung des Fahrzeugs und er eigentlichen Beleuchtungsrichtung berücksichtigt.

Aus der Aufgabenstellung versteht der Fachmann, daß mit dem Begriff des fahrtrichtungsabhängigen Betriebs der Beleuchtungsoptik (2) um die Beleuchtungsrichtung der Beleuchtungsoptik (2), welche im allgemeinen mit der Beleuchtungsrichtung der sichtbares Licht emittierenden Scheinwerfer des Fahrzeugs übereinstimmt, gemeint ist.

Vor allem beim Einsatz von mehreren Beleuchtungsoptiken (2) und Empfangsoptiken in einem Kraftfahrzeug ist es von Vorteil diese unabhängig von einer Fahrtrichtung in Abhängigkeit ihrer Beleuchtungsrichtung zu betreiben.

Die Elemente einer solchen Anordnung einer oder mehrere Optiken (2) und (3) sind hierbei die selben, wie im fahrtrichtungsabhängigen Betrieb, jedoch werden die Beleuchtungsoptiken (2) nun abhängig von deren aktuellen Beleuchtungsrichtung betrieben. Dies trägt beispielsweise den neuerdings aufkommenden in ihrer Beleuchtungsrichtung steuerbaren, also schwenkbaren Scheinwerfern Rechnung. Diese Scheinwerfer können beispielsweise in Ihrer Ausrichtung dem Kurvenverlauf von Straßen nachgeführt werden oder bei detektierten Gefahren die von Randbereichen der Fahrbahn ausgehen dorthin ausgerichtet werden. Auch trägt diese alternative Ausführungsform der Erfindung der Benutzung von Rückfahrtscheinwerfern bzw. von Suchscheinwerfern (beispielsweise in Rettungsfahrzeugen) Rechnung.

Fährt ein Fahrzeug im Rückwärtsgang, so sind die Hauptscheinwerfer des Fahrzeugs immer noch in die selbe Richtung ausgerichtet, wie bei einer Vorwärtsfahrt. Aus diesem Grunde sollte deren Betrieb auch unabhängig von der nun gegenläufigen Fahrtrichtung immer noch gleich betrieben werden, um Blendungen anderer Fahrzeuge zu vermeiden.

Auch läßt sich durch den alternative, auf den Beleuchtungsrichtung bezogenen Betrieb der Beleuchtungsoptiken die Blendung durch stehende oder parkende Fahrzeuge mit eingeschalteter Beleuchtung vermeiden.

In besonders vorteilhafter weise kann mittels der erfindungsgemäßen Anordnung die von der Empfangsoptik (3) empfangenen Information in einer für die menschliche Wahrnehmung geeigneten Weise, vorzugsweise einem Display, dargebracht werden.

Wird diese Information jedoch nur von technischen Systemen verwandt, ist es auch denkbar die Anordnung ohne eine solche Anordnung zur Informationsdarbietung auszuführen.

## Patentansprüche

1. Anordnung zur Verbesserung der Sicht in Fahrzeugen mit mindestens einer Beleuchtungsoptik (2) zur Abstrahlung von infrarotem gepulsten Licht in einer Beleuchtungsrichtung und mindestens einer ihr zugeordneten Empfangsoptik (3) zum Empfang reflektierter Anteile des abgestrahlten Lichts und einem Display, mittels dem die von der Empfangsoptik (3) empfangene Information in einer für die menschliche Wahrnehmung geeigneten Weise dargebracht werden können, wobei ein Mittel zur Betriebssteuerung der Beleuchtungsoptik zur Abstrahlung des infraroten gepulsten Lichts vorgesehen ist, **dadurch gekennzeichnet,**
**daß** zur Ermittlung der dieser Beleuchtungsrichtung entsprechenden Fahrtrichtung ein Kompaß vorgesehen ist,
**daß** für eine Mehrzahl von vorgegebenen Richtungsbereichen jeweils ein anderer Zeitschlitz zum Aussenden vom infraroten gepulsten Licht definiert wird,
**daß** das Mittel zur Betriebssteuerung die Beleuchtungsoptik so ansteuert, daß gepulstes infrarotes Licht mit festem Zeittakt und in dem der ermittelten Fahrtrichtung entsprechenden Zeitschlitz ausgesandt wird,
wobei der Empfang der Empfangsoptik mit dem Zeitschlitz synchronisiert ist.

2. Anordnung nach Anspruch 1, **dadurch gekennzeichnet, dass** der Kompaß ein elektronischer Kompaß ist, welcher insbesondere in Verbindung mit einem Positionsbestimmungssystem oder einem Navigationsgerät steht.

3. Anordnung nach einem der Ansprüche 1 oder 2, **dadurch gekennzeichnet, dass** die Beleuchtungsoptik (2) Teil eines Laserscheinwerfers ist, der eine in einem Bereich von 800 bis 2000 nm, vorzugsweise 810 nm, emittierende Laserdiode (D) mit einer Sendeleistung von etwa 4 Watt umfaßt, um ein infrarotes Licht mit einem Tastverhältnis zwischen 1:3 und 1:100 zu emittieren.

4. Anordnung nach einem der Ansprüche 1 bis 3, **dadurch gekennzeichnet, dass** die Beleuchtungsoptik (2) ein Mittel zum fahrtrichtungsabhängigen Betrieb bei einem festen Zeittakt umfaßt, und die Anordnung eine Funkvorrichtung (7) zum Empfang des festen Zeittakts umfasst.

5. Anordnung nach Anspruch 4, wobei die Funkvorrichtung (7) eine Funkuhr oder ein Funktelefon oder ein globales Positionierungssystem enthält.

6. Anordnung nach einem der Ansprüche 1 bis 5, **dadurch gekennzeichnet, dass** die Beleuchtungsoptik (2) ein Mittel zum fahrtrichtungsabhängigen Betrieb mit einer fahrtrichtungsabhängigen Wellenlänge umfaßt.

7. Anordnung nach Anspruch 6, wobei die Empfangsoptik (3) ein jeder der Wellenlängen der Beleuchtungsoptik (2) entsprechendes Bandpaßfilter umfaßt und ein Mittel vorhanden ist um die Wellenlängen der Beleuchtungsoptik und die Bandpaßfilter abhängig von der Fahrtrichtung auszuwählen.

8. Anordnung nach Anspruch 7, wobei die Bandpaßfilter der Empfangsoptik (3) an einem Filterrad angebracht sind.

9. Anordnung einem der Ansprüche 6 bis 8, wobei die Anordnung ein Mittel umfaßt, um die Wellenlänge des von der Beleuchtungsoptik (2) emittierten gepulsten Lichts in einem Bereich um 800nm auswählen zu können.

## Claims

1. Arrangement for improving visibility in vehicles having at least one illumination optical system (2) for irradiating the infrared pulsed light in an illumination direction and at least one reception optical system (3) which is assigned thereto and has the purpose of receiving reflected components of the irradiated light, and a display by means of which the information received from the reception optical system (3) can be presented in a way which is suitable for human perception, a means for operationally controlling the illumination optical system in order to emit the infrared pulsed light being provided, **characterized in that**
a compass is provided to determine the direction of travel corresponding to this illumination direction,
**in that** in each case a different time slot for emitting infrared pulsed light is defined for a multiplicity of predefined direction regions,
**in that** the operational control means actuates the illumination optical system in such a way that pulsed infrared light is emitted with a fixed time clock and in the time slot corresponding to the direction of travel which has been determined,
the reception of the reception optical system being synchronized with the time slot.

2. Arrangement according to Claim 1, **characterized in that** the compass is an electronic compass which is connected in particular to a position-determining system or a navigation unit.

3. Arrangement according to one of Claims 1 or 2, **characterized in that** the illumination optical system (2) is part of a laser headlight which comprises a laser diode (D) which emits in a range from 800 to 2000 nm, preferably 810 nm, and has a transmission power of approximately 4 watts, in order to emit an infrared light with a pulse-duty factor between 1:3 and 1:100.

4. Arrangement according to one of Claims 1 to 3, **characterized in that** the illumination optical system (2) comprises a means for operating as a function of the direction of travel with a fixed time clock, and the arrangement comprises a radio device (7) for receiving the fixed time clock.

5. Arrangement according to Claim 4, the radio device (7) containing a radio clock or a radio telephone or a global positioning system.

6. Arrangement according to one of Claims 1 to 5, **characterized in that** the illumination optical system (2) comprises a means for operating as a function of the direction of travel and with a wavelength which is dependent on the direction of travel.

7. Arrangement according to Claim 6, the reception optical system (3) comprising a bandpass filter which corresponds to each of the wavelengths of the illumination optical system (2), and there is a means for selecting the wavelengths of the illumination optical system and selecting the bandpass filters as a function of the direction of travel.

8. Arrangement according to Claim 7, the bandpass filters of the reception optical system (3) being provided on a filter wheel.

9. Arrangement according to one of Claims 6 to 8, the arrangement comprising a means so that the wavelength of the pulsed light emitted by the illumination optical system (2) can be selected in a range about 800 nm.

## Revendications

1. Dispositif pour améliorer la visibilité dans des véhicules automobiles, comportant au moins une optique d'éclairage (2) pour diffuser de la lumière infrarouge pulsée dans un sens d'éclairage et au moins une optique de réception (3) associée à celle-ci pour recevoir des parts réfléchies de la lumière diffusée et un écran de visualisation, au moyen duquel les informations reçues par l'optique de réception (3) peuvent être transposées d'une manière appropriée à la perception humaine, un moyen pour commander le fonctionnement de l'optique d'éclairage pour la diffusion de la lumière infrarouge pulsée étant prévu, **caractérisé en ce qu'**une boussole est prévue pour déterminer le sens de marche correspondant audit sens d'éclairage, **en ce qu'**une autre fente de temps pour émettre de la lumière infrarouge pulsée est chaque fois définie pour une pluralité de plages de directions prédéfinies et **en ce que** le moyen pour commander le fonctionnement de l'optique d'éclairage commande celle-ci de telle sorte que de la lumière infrarouge pulsée soit émise à une fréquence fixe et dans la fente de temps correspondant au sens de marche détecté, la réception de l'optique de réception étant synchronisée avec la fente de temps.

2. Dispositif selon la revendication 1, **caractérisé en ce que** la boussole est une boussole électronique, laquelle est en particulier en communication avec un système de détermination de la position ou un appareil de navigation.

3. Dispositif selon l'une des revendications 1 ou 2, **caractérisé en ce que** l'optique d'éclairage (2) fait partie d'un projecteur laser, lequel comporte une diode laser (D) émettant dans une plage de 800 à 2000 nm, de préférence 810 nm, avec une puissance d'émission d'environ 4 Watts, pour émettre une lumière infrarouge avec un rapport de cycle entre 1:3 et 1:100.

4. Dispositif selon l'une quelconque des revendications 1 à 3, **caractérisé en ce que** l'optique d'éclairage (2) comporte un moyen pour le fonctionnement en fonction du sens de marche à une fréquence fixe et **en ce que** le dispositif comporte un dispositif radio (7) pour la réception de la fréquence fixe.

5. Dispositif selon la revendication 4, le dispositif radio (7) renfermant une horloge radio ou un radiotéléphone ou un système de positionnement global.

6. Dispositif selon l'une quelconque des revendications 1 à 5, **caractérisé en ce que** l'optique d'éclairage (2) comporte un moyen pour le fonctionnement en fonction du sens de marche avec une longue d'onde dépendant du sens de marche.

7. Dispositif selon la revendication 6, l'optique de réception (3) comportant un filtre passe-bande correspondant à chacune des longueurs d'onde de l'optique d'éclairage (2) et un moyen étant prévu pour sélectionner les longueurs d'onde de l'optique d'éclairage et le filtre passe-bande en fonction du sens de marche.

8. Dispositif selon la revendication 7, le filtre passe-bande de l'optique de réception (3) étant monté sur une roue à filtres.

9. Dispositif selon l'une quelconque des revendications 6 à 8, le dispositif comportant un moyen permettant de sélectionner dans une plage de 800 nm la longueur d'onde de la lumière pulsée émise par l'optique d'éclairage (2).
